# EUROPEAN PATENT SPECIFICATION

(11) **EP 3 670 215 B1**
(45) Date of publication and mention of the grant of the patent: **14.09.2022**
(21) Application number: 19217115.5
(22) Date of filing: 17.12.2019
(51) Int. Cl.: B60D 1/46, B60D 1/04, A01B 59/042

(54) **TOWING DEVICE FOR AN AGRICULTURAL OR INDUSTRIAL VEHICLE**
ANHÄNGERKUPPLUNG FÜR EIN LANDWIRTSCHAFTLICHES ODER INDUSTRIELLES FAHRZEUG
DISPOSITIF D'ATTELAGE POUR UN VÉHICULE AGRICOLE OU INDUSTRIEL

(30) Priority: 17.12.2018 IT 201800011189
(43) Date of publication of application: 24.06.2020
(73) Proprietor: CBM - S.P.A., 41122 Modena (IT)
(72) Inventor: Cornia, Enrico Maria, 41122 Modena (IT)
(74) Representative: Zoli, Filippo

(56) References cited:
- EP-A1- 2 103 458
- EP-A1- 3 222 129
- GB-A- 2 380 720
- GB-A- 2 463 988
- US-A- 3 561 789
- US-A- 4 542 913

## Description

The present invention relates to a towing device for an agricultural or industrial vehicle.

Towing devices for agricultural or industrial vehicles, conventionally called pick up hitches, generally consist of a fixed frame, which can be associated with the towing vehicle, and of a movable frame connected thereto, which supports a hooking element to the auxiliary apparatus to be towed.

In particular, the hooking element can be moved closer and further away from the fixed frame to allow the engagement/disengagement, respectively, with the auxiliary apparatus and to carry out the towing operation of the same.

More in detail, the movable frame is moved between an open position and a closed position to allow the engagement/disengagement, respectively, of the hooking element to the auxiliary apparatus and to tow the auxiliary apparatus itself.

Nowadays, with the use of increasingly larger and heavier agricultural and industrial vehicles, the operations of connecting two or more vehicles together cannot be carried out manually and, in order to ensure the proper conduct of these operations as well as the operators' safety, the towing device is usually provided with movement means which are adapted to properly move the movable frame and allow the correct hooking to the vehicle to be towed.

The movement means are therefore crucial as they are responsible for each of the displacement phases of the movable frame and of the hooking element.

A first type of known towing devices provides for the movable frame being hinged to the fixed frame and the hooking element being firmly locked together with it.

The hooking element then displaces with a rotary movement from the closed position to the open position to engage/disengage with the auxiliary apparatus to be towed and from the open position to the closed position to tow the same. This first type of known devices has the drawback that the position taken by the hooking element in the open position of the movable frame is not very protruding compared to the fixed frame, so that the engagement with the auxiliary apparatus is particularly difficult and requires for the operator to move at the same time as the towing vehicle to correctly position the hooking element itself with respect to the apparatus to be towed.

Another type of towing devices provides, on the other hand, that the movable frame is hinged to the fixed frame, and that the hooking element slides with respect to the movable frame between a retracted position and an extended position.

In this case, in its extended position, the hooking element is more protruding from the fixed frame than the type described above and therefore allows the correct positioning with respect to the auxiliary apparatus without the need to move the towing vehicle. At the same time, however, the hooking operation of the auxiliary apparatus is equally complicated since the operator needs to simultaneously adjust both the rotational movement of the movable frame with respect to the fixed frame, and the shift of the hooking element with respect to the movable frame.

In addition, this second type of known towing device is of complex construction.

The known type of towing devices, therefore, do not allow an easy and practical adjustment of the movements necessary to allow the engagement of the hooking element with the auxiliary apparatus to be towed, which inevitably affects the execution times.

In addition, the correct performance of the operations described above is closely related to the operator's skills.

EP 2 103 458 and US 4 542 913 both discloses a towing device for an agricultural or industrial vehicle a fixed frame, which can be associated with the towing vehicle, and of a movable frame connected thereto, which supports a hooking element to the auxiliary apparatus to be towed. The movable frame can be moved with respect to the fixed frame between at least one open position and one closed position and the hooking element can be moved between an extended position, in which it is moved away with respect to the fixed frame to engage or disengage with the auxiliary apparatus, and a retracted position, in which it is approached to the fixed frame, to tow the auxiliary apparatus. The fixed frame of both EP 2 103 458 and US 4 542 913 comprises a relative slot inside which in housed a sliding element for guiding the movement of the movable frame between the open and closed position.

The main aim of the present invention is to devise a towing device for an agricultural or industrial vehicle that allows simplifying the hooking operation of the auxiliary apparatus to be towed compared to the devices of known type. Within this aim, one object of the present invention is to make a towing device for an agricultural or industrial vehicle which allows reducing the number of actions that the operator must control to perform the hooking operation to the auxiliary apparatus to be towed.

One object of the present invention is to devise a towing device for an agricultural or industrial vehicle that allows reducing the time required to perform the hooking operations to the auxiliary apparatus.

Another object is to free as much as possible the execution of these operations from the operator's skills.

Another object of the present invention is to make a towing device for an agricultural or industrial vehicle characterized by greater constructive simplicity than the devices of known type.

A further object of the present invention is to allow the operator to carry out the operations under conditions of greater safety than the devices of known type.

Another object of the present invention is to devise a towing device for an agricultural or industrial vehicle that allows overcoming the aforementioned drawbacks of the prior art in a simple, rational, easy, effective to use and low cost solution.

The objects mentioned above are achieved by the present towing device for an agricultural or industrial vehicle according to claim 1.

Other characteristics and advantages of the present invention will be more evident from the description of a preferred, but not exclusive, embodiment of a towing device for an agricultural or industrial vehicle, illustrated as an indication, but not limited to, in the attached tables of drawings in which:

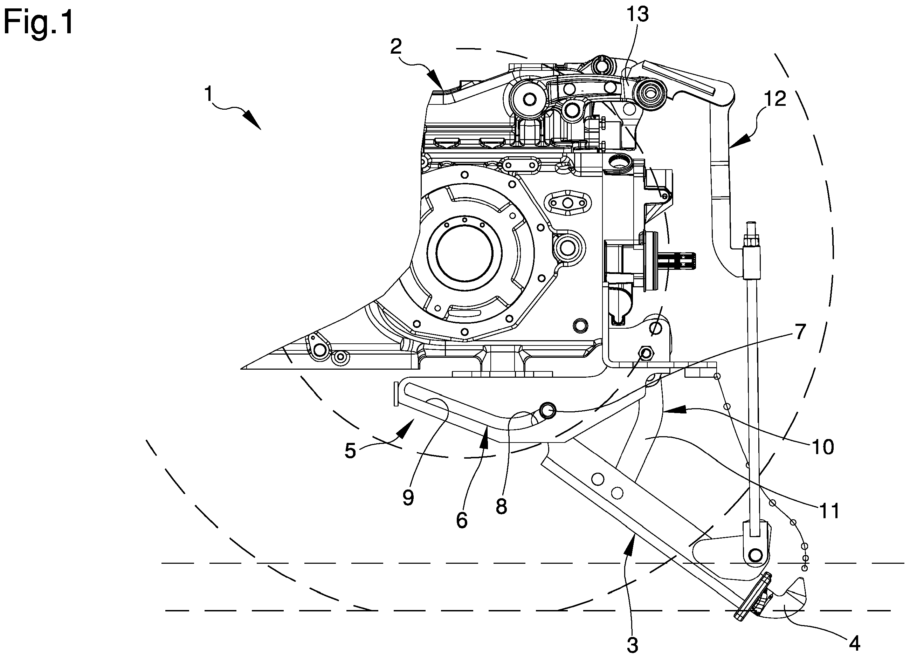

Figure 1 is a side view of the towing device according to the invention;

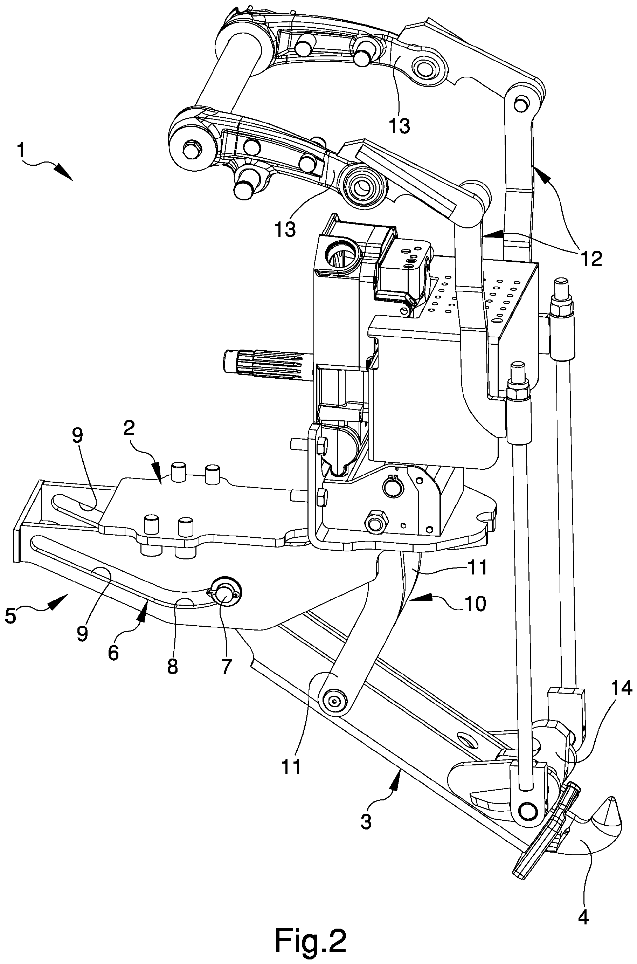

Figure 2 is a perspective view of the invention in an engagement/disengagement configuration;

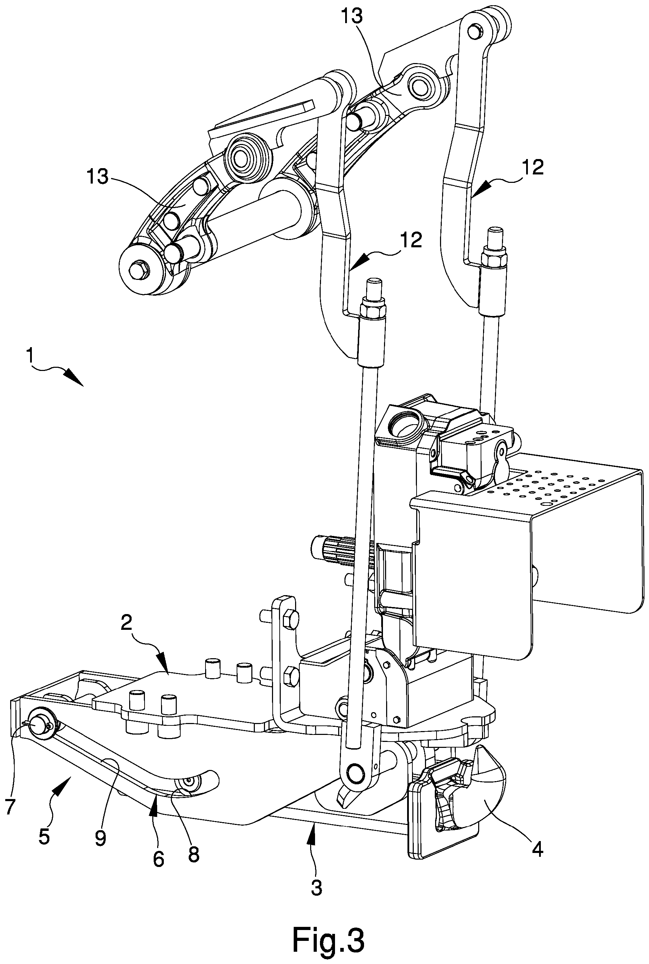

Figure 3 is a perspective view of the invention in the towing configuration.

With particular reference to these figures, reference numeral 1 globally indicates a towing device for an agricultural or industrial vehicle.

The towing device 1 for an agricultural or industrial vehicle comprises a fixed frame 2 associable with an agricultural or industrial vehicle and a movable frame 3 kinematically connected to the fixed frame 2, supporting at least one hooking element 4 intended to engage with an auxiliary apparatus to be towed. More particularly, the movable frame 3 can be moved between an open position, in which it is rotated so as to be inclined with respect to the fixed frame 2, and a closed position, in which it is approached to the fixed frame 2. In the closed position the two frames 2 and 3 are substantially aligned with each other.

At the same time, the hooking element 4 can be moved between an extended position, in which it is moved away with respect to the fixed frame 2 to engage or disengage with the auxiliary apparatus, and a retracted position, in which it is approached to the fixed frame 2, to tow the auxiliary apparatus.

The towing device 1 for an agricultural or industrial vehicle also comprises guide means 5 adapted to move the movable frame 3 with respect to the fixed frame 2.

According to the invention, the hooking element 4 is locked together with the movable frame 3 and the guide means 5 comprise a slot 6 defined on at least one of either the fixed frame 2 or the movable frame 3, and at least one sliding element 7 housed in a sliding manner inside the slot 6, and associated with the other of either the fixed frame 2 or the movable frame 3.

The slot 6 has at least one portion with a curvilinear extension so that the hooking element 4, due to the displacement of the sliding element 7 along the slot 6, moves between an engagement/disengagement configuration, in which it is in the extended position, with the movable frame 3 in the open position, and a towing configuration, in which it is in the retracted position, with the movable frame 3 in the closed position, thus carrying out a predefined non-linear trajectory T.

More specifically, the displacement of the sliding element 7 along this curvilinear portion 8 gives the hooking element 4 a rotary movement that allows it to perform an almost vertical stretch of trajectory that facilitates the engagement or disengagement thereof with the auxiliary apparatus.

In addition, the slot 6 comprises a substantially rectilinear portion 9 adapted to allow a shifting movement of the hooking element 4.

The word "substantially" used herein means less than the machining tolerances. By means of this rectilinear portion 9, once the auxiliary apparatus has been hooked up, the hooking element 4 is progressively raised and moved closer to the fixed frame 2 until it reaches the towing configuration.

The curvilinear portion 8 and the rectilinear portion 9 are contiguous to each other, so as to define an individual path for the sliding element 7.

As a result of the shape of the slot 6, therefore, the hooking element 4 moves from the engagement/disengagement configuration to the towing configuration in a single movement.

Preferably, the slot 6 is defined on the fixed frame 2 and the sliding element 7 is associated with the movable frame 3, spaced apart from the hooking element 4.

In the embodiment shown in the figures, the sliding element 7 is positioned at the opposite end to the hooking element 4 and the slot 6 is articulated so that the curvilinear portion 8 and the rectilinear portion 9 join together and converge downwards.

More specifically, the sliding element 7 runs along the rectilinear portion 9 and the curvilinear portion 8 in succession following the displacement of the hooking element 4 from the towing configuration to the engagement/disengagement configuration.

Conveniently, the device 1 comprises mechanical connecting means 10 for connecting the movable frame 3 to the fixed frame 2, which comprise at least one connecting element 11 interposed between the fixed frame 2 and the movable frame 3 and hinged to both.

The connecting element 11 is of the type of a connecting rod and allows the sliding element 7 to be displaced along the slot 6.

The connecting element 11, therefore, moves at the same time as the movable frame 3 and its position with respect thereto contributes to give the specific trajectory T to the hooking element 4. In particular, the shape of the slot 6, the length of the connecting element 11 and the position of its hinging points uniquely define the trajectory T.

In the embodiment shown in the figures, the connecting element 11 is hinged to the movable frame 3 in a position interposed between the sliding element 7 and the hooking element 4.

Advantageously, the device 1 comprises movement means 12 which are adapted to move the movable frame 3 with respect to the fixed frame 2.

In particular, the movement means 12 comprise at least one lever mechanism 13 kinematically connected to the movable frame 3.

As shown in the figures, the lever mechanism 13 is hinged to the movable frame 3 in a position interposed between the connecting element 11 and the hooking element 4.

The lever mechanism 13 can be operated either mechanically or by a fluid-operated piston.

Conveniently, the device 1 also comprises locking means for locking the movable frame 3 with respect to the fixed frame 2, when the hooking element 4 is in the towing configuration.

The locking means ensure that the hooking element 4 remains in the towing configuration, in the proximity of the fixed frame 2, during the towing operation, and also allow the tensile force to be correctly transferred to the fixed frame 2.

The locking means comprise a locking element 14 and a gripping element, which is engageable by this locking element 14 following the achievement of the towing configuration by the hooking element 4.

Preferably, the locking element 14 is locked together with the movable frame 3, the gripping element is hinged around a relevant axis to the fixed frame 2 and is consequently movable with respect thereto.

During at least one stretch of the displacement of the hooking element 4 towards the towing configuration, the gripping element is movable in rotation with respect to the fixed frame 2 due to the interaction with the locking element 14, moving from a rest position to at least one work position.

Elastic means are conveniently provided which are adapted to counteract the displacement of the gripping element from the rest position to the work position. In practice, the locking element 14 pushes the gripping element upwards which, by means of the hinging to the fixed frame 2, is able to rotate and free the passage of the locking element 14.

After the hooking element 4 has reached the towing configuration, the gripping element is returned to its initial rest position by the elastic means, in which it engages with the locking element 14.

The device 1 also comprises sensor means, not shown in detail in the figures, adapted to detect the locking of the movable frame 3 with respect to the fixed frame 2, in order to ensure a proper control thereof.

The sensor means are associated with the fixed frame 2, are fixed with respect to the gripping element and are adapted to detect when the gripping element itself is in the rest position. After the gripping element has reached the rest position, the sensor means are adapted to send a corresponding signal to an electronic control unit not shown in the figures.

Preferably, the sensor means are of the inductive type.

The operation of the present invention is as follows.

In order to tow an auxiliary apparatus, the operator initially moves the hooking element 4 away from its retracted position with respect to the fixed frame 2.

By operating the movement means 12, the sliding element 7 moves along the slot 6, the movable frame 3 is pushed downwards and at the same time the hooking element 4 is pushed outwards, passing from the towing configuration to the engagement/disengagement configuration following the trajectory T.

In this phase, the sliding element 7 moves along the slot 6 and, also thanks to the presence of the connecting means 10, displaces the hooking element 4 outwards according to the trajectory T.

After the auxiliary apparatus has been positioned, the movable frame 3 is returned to the closed position by the movement means 12.

In this phase, the hooking element 4, placed underneath the auxiliary apparatus, carries out the trajectory T in the opposite direction, which gives it a particular roto-translatory motion.

In particular, in the initial stretch of the trajectory T, the hooking element 4 raises steeply and engages with the auxiliary apparatus and then continues and approaches the fixed frame 2 until it reaches the towing configuration.

In practice, the path defined by the slot 6, combined with the movement of the connecting element 11, constrains the movable frame 3 and consequently the hooking element 4, to a single roto-translatory motion that allows the direct passage from the engagement/disengagement configuration to the towing configuration.

Finally, the movable frame 3, arriving in the closed position, causes the locking element 14 to engage with the gripping element, thus being constrained to the fixed frame 2. The sensor means then inform the operator of the possibility of going on with the towing operation.

It has in practice been ascertained that the described invention achieves the intended objects and, in particular, the fact is underlined that the towing device 1 for an agricultural or industrial vehicle makes it possible to simplify the hooking operation of the auxiliary apparatus to be towed.

The towing device 1 for an agricultural or industrial vehicle, in fact, allows reducing the number of actions that the operator must control to carry out the hooking operation to the auxiliary apparatus to be towed, with a consequent reduction in the time of execution of these operations.

The towing device 1 for an agricultural or industrial vehicle, moreover, allows releasing as much as possible the execution of such operations from the operator's skills and to carry them out under conditions of greater safety. Finally, the towing device 1 for an agricultural or industrial vehicle is characterized by greater ease of construction.

## Claims

1. Towing device (1) for an agricultural or industrial vehicle, comprising:
- a fixed frame (2) associable with an agricultural or industrial vehicle;
- a movable frame (3) kinematically connected to said fixed frame (2) and supporting at least one hooking element (4) intended to engage with an auxiliary apparatus to be towed, wherein said movable frame (3) can be moved with respect to said fixed frame (2) between at least one open position and one closed position and said hooking element (4) can be moved between an extended position, in which it is moved away with respect to said fixed frame (2) to engage or disengage with the auxiliary apparatus, and a retracted position, in which it is approached to said fixed frame (2), to tow the auxiliary apparatus;
- movement means (12) which are adapted to move said movable frame (3) with respect to said fixed frame (2);
- guide means (5) adapted to guide said movable frame (3) with respect to said fixed frame (2);
wherein said hooking element (4) is locked together with said movable frame (3) and said guide means (5) comprise at least one slot (6) defined on at least one of said fixed frame (2) and said movable frame (3), and at least one sliding element (7) housed in a sliding manner inside said slot (6) and associated with the other of said movable frame (3) and said fixed frame (2), and wherein said slot (6) has at least one portion with a curvilinear extension so that said hooking element (4), due to the displacement of said sliding element (7) along said slot (6), moves between an engagement/disengagement configuration, in which it is in the extended position, with said movable frame (3) in open position, and a towing configuration, in which it is in the retracted position, with said movable frame (3) in closed position, carrying out a predefined non-linear trajectory (T), **characterized by** the fact that
the towing device further comprises mechanical connecting means (10) for connecting said movable frame (3) to said fixed frame (2) comprising at least one connecting element (11) interposed between said fixed frame (2) and said movable frame (3) and hinged to both;
said slot (6) comprises at least a rectilinear portion (9), adapted to allow a translational movement of said hooking element (4) where said curvilinear portion (8) and said rectilinear portion (9) are contiguous to each other;
and said curvilinear portion (8) and said rectilinear portion (9) join together and converge downwards, said sliding element (7) running along said rectilinear portion (9) and said curvilinear portion (8) in succession following the displacement of said hooking element (4) from the towing configuration to the engagement/disengagement configuration.

2. Device (1) according to claim 1, **characterized by** the fact that said slot (6) is defined on said fixed frame (2) and said sliding element (7) is associated with said movable frame (3).

3. Device (1) according to one or more of the preceding claims, **characterized by** the fact that said connecting element (11) is hinged to said movable frame (3) in a position interposed between said sliding element (7) and said hooking element (4).

4. Device (1) according to one or more of the preceding claims, **characterized by** the fact that said movement means (12) comprise at least one lever mechanism (13) kinematically connected to said movable frame (3).

5. Device (1) according to one or more of the preceding claims, **characterized by** the fact that said lever mechanism (13) is hinged to said movable frame (3) in a position interposed between said connecting element (11) and said hooking element (4).

6. Device (1) according to one or more of the preceding claims, **characterized by** the fact that it comprises locking means for locking said movable frame (3) with respect to said fixed frame (2), said hooking element (4) being in towing configuration.

7. Device (1) according to one or more of the preceding claims, **characterized by** the fact that said locking means comprise a locking element (14) and a gripping element which is engageable by said locking element (14) following the achievement of the towing configuration by said hooking element (4).

8. Device (1) according to one or more of the preceding claims, **characterized by** the fact that it comprises sensor means adapted to detect the locking of said movable frame (3) with respect to said fixed frame (2).

## Patentansprüche

1. Schleppvorrichtung (1) für ein landwirtschaftliches oder industrielles Fahrzeug, umfassend:
- einen festen Rahmen (2), der mit einem landwirtschaftlichen oder industriellen Fahrzeug verbunden werden kann;
- einen beweglichen Rahmen (3), der kinematisch mit dem festen Rahmen (2) verbunden ist und mindestens ein Hakenelement (4) trägt, das dazu bestimmt ist, mit einem zu schleppenden Hilfsgerät in Eingriff zu treten, wobei der bewegliche Rahmen (3) in Bezug auf den festen Rahmen (2) zwischen mindestens einer offenen Position und einer geschlossenen Position bewegt werden kann und das Hakenelement (4) zwischen einer ausgefahrenen Position, in der es in Bezug auf den festen Rahmen (2) wegbewegt wird, um mit dem Hilfsgerät in Eingriff zu treten oder sich von diesem zu lösen, und einer eingezogenen Position bewegt werden kann, in der es sich dem festen Rahmen (2) nähert, um das Hilfsgerät zu schleppen;
- Bewegungsmittel (12), die ausgebildet sind, den beweglichen Rahmen (3) in Bezug auf den festen Rahmen (2) zu bewegen;
- Führungsmittel (5), die ausgebildet sind, den beweglichen Rahmen (3) in Bezug auf den festen Rahmen (2) zu führen;
wobei das Hakenelement (4) zusammen mit dem beweglichen Rahmen (3) verriegelt ist und die Führungsmittel (5) mindestens einen Schlitz (6), der an dem festen Rahmen (2) oder dem beweglichen Rahmen (3) definiert ist, und mindestens ein Gleitelement (7) umfassen, das gleitend in dem Schlitz (6) aufgenommen ist und mit dem entsprechenden anderen des beweglichen Rahmens (3) oder des festen Rahmens (2) verbunden ist, und wobei der Schlitz (6) mindestens einen Abschnitt mit einer gekrümmten Erstreckung aufweist, so dass sich das Hakenelement (4), aufgrund der Verschiebung des Gleitelements (7) entlang des Schlitzes (6) zwischen einer Eingriffs-/ Lösekonfiguration, in der es sich in der ausgefahrenen Position befindet, wobei sich der bewegliche Rahmen (3) in der offenen Position befindet, und einer Schleppkonfiguration, in der es sich in der eingezogenen Position befindet, wobei sich der bewegliche Rahmen (3) in der geschlossenen Position befindet, bewegt und dabei eine vordefinierte nichtlineare Bahn (T) durchläuft,
**dadurch gekennzeichnet, dass**
die Schleppvorrichtung ferner mechanische Verbindungsmittel (10) zum Verbinden des beweglichen Rahmens (3) mit dem festen Rahmen (2) umfasst, die mindestens ein Verbindungselement (11) umfassen, das zwischen dem festen Rahmen (2) und dem beweglichen Rahmen (3) angeordnet und an beiden angelenkt ist;
der Schlitz (6) mindestens einen geradlinigen Abschnitt (9) aufweist, der ausgebildet ist, eine Translationsbewegung des Hakenelements (4) zu ermöglichen, wobei der gekrümmte Abschnitt (8) und der geradlinige Abschnitt (9) aneinander angrenzen; und der gekrümmte Abschnitt (8) und der geradlinige Abschnitt (9) ineinander übergehen und nach unten konvergieren, wobei das Gleitelement (7) entlang des geradlinigen Abschnitts (9) und des gekrümmten Abschnitts (8) in Folge der Verschiebung des Hakenelements (4) von der Schleppkonfiguration in die Eingriffs-/ Lösekonfiguration läuft.

2. Vorrichtung (1) nach Anspruch 1, **dadurch gekennzeichnet, dass** der Schlitz (6) auf dem festen Rahmen (2) definiert ist und das Gleitelement (7) mit dem beweglichen Rahmen (3) verbunden ist.

3. Vorrichtung (1) nach einem oder mehreren der vorhergehenden Ansprüche, **dadurch gekennzeichnet, dass** das Verbindungselement (11) an dem beweglichen Rahmen (3) in einer Position angelenkt ist, die zwischen dem Gleitelement (7) und dem Hakenelement (4) liegt.

4. Vorrichtung (1) nach einem oder mehreren der vorhergehenden Ansprüche, **dadurch gekennzeichnet, dass** die Bewegungsmittel (12) mindestens einen Hebelmechanismus (13) umfassen, der kinematisch mit dem beweglichen Rahmen (3) verbunden ist.

5. Vorrichtung (1) nach einem oder mehreren der vorangehenden Ansprüche, **dadurch gekennzeichnet, dass** der Hebelmechanismus (13) an dem beweglichen Rahmen (3) in einer Position angelenkt ist, die zwischen dem Verbindungselement (11) und dem Hakenelement (4) liegt.

6. Vorrichtung (1) nach einem oder mehreren der vorhergehenden Ansprüche, **dadurch gekennzeichnet, dass** sie Verriegelungsmittel zum Verriegeln des beweglichen Rahmens (3) in Bezug auf den festen Rahmen (2) umfasst, wobei sich das Hakenelement (4) in Schleppkonfiguration befindet.

7. Vorrichtung (1) nach einem oder mehreren der vorhergehenden Ansprüche, **dadurch gekennzeichnet, dass** die Verriegelungsmittel ein Verriegelungselement (14) und ein Greifelement umfassen, das mit dem Verriegelungselement (14) in Eingriff gebracht werden kann, nachdem das Hakenelement (4) die Schleppkonfiguration erreicht hat.

8. Vorrichtung (1) nach einem oder mehreren der vorhergehenden Ansprüche, **dadurch gekennzeichnet, dass** sie Sensormittel umfasst, die ausgebildet sind, die Verriegelung des beweglichen Rahmens (3) in Bezug auf den festen Rahmen (2) zu erfassen.

## Revendications

1. - Dispositif de remorquage (1) pour un véhicule agricole ou industriel, comprenant:
- un cadre fixe (2) apte à être associé à un véhicule agricole ou industriel ;
- un cadre mobile (3) relié cinématiquement audit cadre fixe (2) et supportant au moins un élément d'accrochage (4) destiné à s'engager avec un appareil auxiliaire à remorquer, ledit cadre mobile (3) pouvant être déplacé par rapport audit cadre fixe (2) entre au moins une position ouverte et une position fermée et ledit élément d'accrochage (4) pouvant être déplacé entre une position déployée, dans laquelle il est déplacé à distance dudit cadre fixe (2) pour s'engager avec ou se désengager de l'appareil auxiliaire, et une position rétractée, dans laquelle il est rapproché dudit cadre fixe (2), pour remorquer l'appareil auxiliaire ;
- des moyens de déplacement (12) qui sont agencés pour déplacer ledit cadre mobile (3) par rapport audit cadre fixe (2) ;
- des moyens de guidage (5) agencés pour guider ledit cadre mobile (3) par rapport audit cadre fixe (2) ;
ledit élément d'accrochage (4) étant verrouillé avec ledit cadre mobile (3) et lesdits moyens de guidage (5) comprenant au moins une fente (6) définie sur au moins l'un dudit cadre fixe (2) et dudit cadre mobile (3), et au moins un élément coulissant (7) reçu de manière coulissante à l'intérieur de ladite fente (6) et associé à l'autre dudit cadre mobile (3) et dudit cadre fixe (2), et ladite fente (6) ayant au moins une partie avec une extension curviligne de telle sorte que ledit élément d'accrochage (4), en raison du déplacement dudit élément coulissant (7) le long de ladite fente (6), se déplace entre une configuration d'engagement/désengagement, dans laquelle il se trouve dans la position déployée, avec ledit cadre mobile (3) en position ouverte, et une configuration de remorquage, dans laquelle il se trouve dans la position rétractée, avec ledit cadre mobile (3) en position fermée, en suivant une trajectoire non-linéaire prédéfinie (T),
**caractérisé par le fait que**
le dispositif de remorquage comprend en outre des moyens de liaison mécanique (10) pour relier ledit cadre mobile (3) audit cadre fixe (2) comprenant au moins un élément de liaison (11) interposé entre ledit cadre fixe (2) et ledit cadre mobile (3) et articulé aux deux ;
ladite fente (6) comprend au moins une partie rectiligne (9), agencée pour permettre un mouvement de translation dudit élément d'accrochage (4), ladite partie curviligne (8) et ladite partie rectiligne (9) étant contiguës l'une à l'autre ; et
ladite partie curviligne (8) et ladite partie rectiligne (9) se rejoignent et convergent vers le bas, ledit élément coulissant (7) se déplaçant le long de ladite partie rectiligne (9) et de ladite partie curviligne (8) en succession suite au déplacement dudit élément d'accrochage (4) de la configuration de remorquage à la configuration d'engagement/désengagement.

2. - Dispositif (1) selon la revendication 1, **caractérisé par le fait que** ladite fente (6) est définie sur ledit cadre fixe (2) et ledit élément coulissant (7) est associé audit cadre mobile (3).

3. - Dispositif (1) selon une ou plusieurs des revendications précédentes, **caractérisé par le fait que** ledit élément de liaison (11) est articulé audit cadre mobile (3) dans une position interposée entre ledit élément coulissant (7) et ledit élément d'accrochage (4).

4. - Dispositif (1) selon une ou plusieurs des revendications précédentes, **caractérisé par le fait que** lesdits moyens de déplacement (12) comprennent au moins un mécanisme à levier (13) relié cinématiquement audit cadre mobile (3).

5. - Dispositif (1) selon une ou plusieurs des revendications précédentes, **caractérisé par le fait que** ledit mécanisme à levier (13) est articulé audit cadre mobile (3) dans une position interposée entre ledit élément de liaison (11) et ledit élément d'accrochage (4).

6. - Dispositif (1) selon une ou plusieurs des revendications précédentes, **caractérisé par le fait qu'**il comprend des moyens de verrouillage pour verrouiller ledit cadre mobile (3) par rapport audit cadre fixe (2), ledit élément d'accrochage (4) étant en configuration de remorquage.

7. - Dispositif (1) selon une ou plusieurs des revendications précédentes, **caractérisé par le fait que** lesdits moyens de verrouillage comprennent un élément de verrouillage (14) et un élément de préhension qui est apte à être engagé par ledit élément de verrouillage (14) suite à l'obtention de la configuration de remorquage par ledit élément d'accrochage (4).

8. - Dispositif (1) selon une ou plusieurs des revendications précédentes, **caractérisé par le fait qu'**il comprend des moyens de détection agencés pour détecter le verrouillage dudit cadre mobile (3) par rapport audit cadre fixe (2).
